(19) Europäisches Patentamt
European Patent Office
Office européen des brevets

(11) **EP 4 002 643 A1**

(12) **EUROPEAN PATENT APPLICATION**

(43) Date of publication:
**25.05.2022 Bulletin 2022/21**

(21) Application number: **20382989.0**

(22) Date of filing: **16.11.2020**

(51) International Patent Classification (IPC):
***H02J 50/12*** *(2016.01)*

(52) Cooperative Patent Classification (CPC):
**H02J 50/12**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fico Triad, S.A.**
**08028 Barcelona (ES)**

(72) Inventor: **RUÍZ ERNI, Iván**
**08028 Barcelona (ES)**

(74) Representative: **Hoffmann Eitle**
**Hoffmann Eitle S.L.U.**
**Paseo de la Castellana 140, 3a planta**
**Edificio LIMA**
**28046 Madrid (ES)**

(54) **WIRELESS POWER RECEIVER FOR ELECTRIC VEHICLES**

(57) The present invention refers to a wireless power receiver (2) adapted to be installed in an electric vehicle, for wirelessly receiving power from the power transmitter (1) of a charging station to recharge the vehicle batteries. The receiver (2) comprises a power-receiving coil ($L_s$) connected at the input of a full bridge active rectifier (4), which is adapted to be connected with a battery of an electric vehicle. The controller, based on an input current ($i_s$) through the rectifier (4), operates the full bridge active rectifier (4) to set an equivalent resistance ($R_{eq}$) that is a close as possible to an optimum equivalent resistance of the receiver. The invention provides a power receiver (2) that optimizes power transfer and power conversion, and that performs voltage and current regulation independently from the transmitter (1) of the charging station.

**FIG. 4**

**Description**

**Field and object of the invention**

The present invention generally refers to wireless power transfer systems for charging the batteries of an electric vehicle.

More specifically, the invention refers to a wireless power receiver adapted to be installed in an electric vehicle for wirelessly receiving power from a charging station, to recharge the vehicle batteries.

An object of the invention is to provide a power receiver that optimizes power transfer and power conversion, and that performs voltage and current regulation independently from the transmitter of the charging station.

An additional object of the invention is to provide a receiver for a wireless power transfer system, that can be constructed with a reduced number of components.

**Background of the invention**

Wireless power transfer systems supply electric power using electromagnetic induction, between a power-transmitting coil of a power transmitter and a power-receiving coil of a receiver. In such systems, magnetic flux generated by the power-transmitting coil is induced at the power-receiving coil when the two coils are magnetically coupled, thereby electric power is transmitted between the coils.

Wireless charging systems for electric vehicles require that the power-transmitting and power-receiving coils, are positioned relative to each other within specific ranges, thus, efficiency of power transmission is influenced by the positional relationship between the power-transmitting coil and the power-receiving coil.

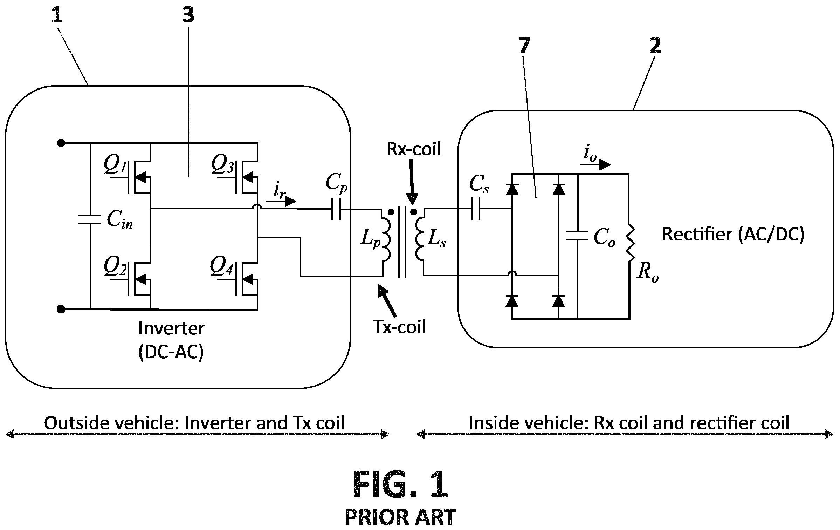

**Figure 1** shows an electric diagram of a conventional wireless power transfer system for charging electric vehicles. The system comprises a transmitter (1) meant to be installed at a charging station, and that comprises a power factor corrector DC-AC inverter (3) and a power-transmitting coil (Tx-coil ($L_p$)) connected at the output of the inverter (3). The inverter (3) generates an alternating sinusoidal current waveform, typically for example between 80 - 90 kHz, and preferably at 85 kHz, that is fed to the power-transmitting coil (Tx-coil ($L_p$)).

The wireless power transfer system also includes a receiver (2) that is meant to be installed at an electric vehicle. The receiver (2) has a power-receiving coil (Rx-coil ($L_s$)) and a rectifier (7), such that the power-receiving coil (Rx-coil ($L_s$)) is connected at the input (a1-a2) of the rectifier (7). The wireless power transfer system additionally includes a resonant tank composed by one capacitor (Cs) or several capacitors, and one or several inductances including the power-receiving coil (Ls). The resonant tank is connected to the rectifier (7).

During the charging process, the two coils are magnetically coupled, so that the alternating sinusoidal current waveform generated by the transmitter (1), is transferred from the power-transmitting coil (Tx-coil ($L_p$)) to the power-receiving (Rx-coil ($L_s$)), and the alternating current and voltage waveforms that reach the receiver (2), are converted by the rectifier (7) into a DC power suitable to charge the batteries of a vehicle.

In the diagram of **Figure 1,** the output load resistance (Ro) is an imaginary resistance that represents the equivalent resistance of the battery charging and that is calculated as ($V_{battery}/ I_o$), wherein $V_{battery}$ is voltage at the battery, and $I_o$ is current through the battery.

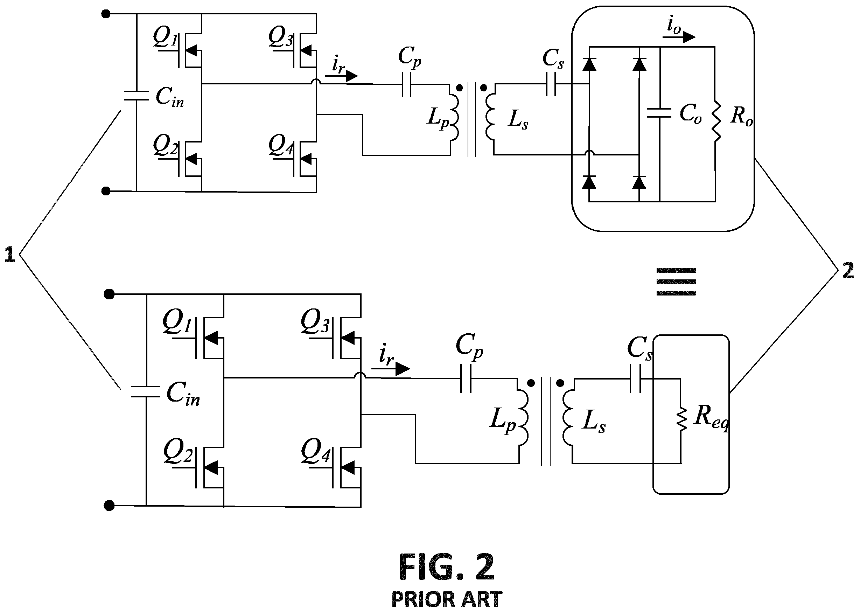

As represented in **Figure 2,** the equivalent resistance (Req) seen at the input port of the rectifier (7), depends on the resistance of the diode rectifier (7), the resistance of the output filter, and the resistance of the output load (Ro).

The output load (Ro) has an equivalent AC resistance before the diode bridge. This AC resistance is usually derived by the fundamental term of the square current waveform at the input of the diode bridge and the output voltage.

It is known in this technical field that in these transmission systems, there is an optimum load resistance that minimizes losses in power conversion and in the inductive resonant link between the transmission and reception coils, so that by operating at that optimum load resistance, the efficiency of the system is maximized. Therefore, the maximum efficiency of the system, is achieved when:

$$R_{eq} \approx \omega \frac{k}{\sqrt{L_p L_s}} = Req_{,opt}$$

wherein: ($L_p$) and ($L_s$) are respectively transmission and reception coils self-inductances, ($\omega$) is the angular switching frequency, (k) is the coupling factor between the two coils, (Req) is the equivalent resistance of a receiver circuit, and (Req $_{opt}$) is the optimum equivalent resistance.

However, there is a problem that the coupling factor (k) depends on the relative alignment, distance and angle between the transmission and reception coils during the charging process, hence, the efficiency of the system would vary in each charging process, since the optimum equivalent resistance (Req $_{opt}$) depends on the value of the coupling factor (k) in each charging operation (it is (k) dependent), thus, the optimum equivalent resistance (Req $_{opt}$) is different in each charging operation.

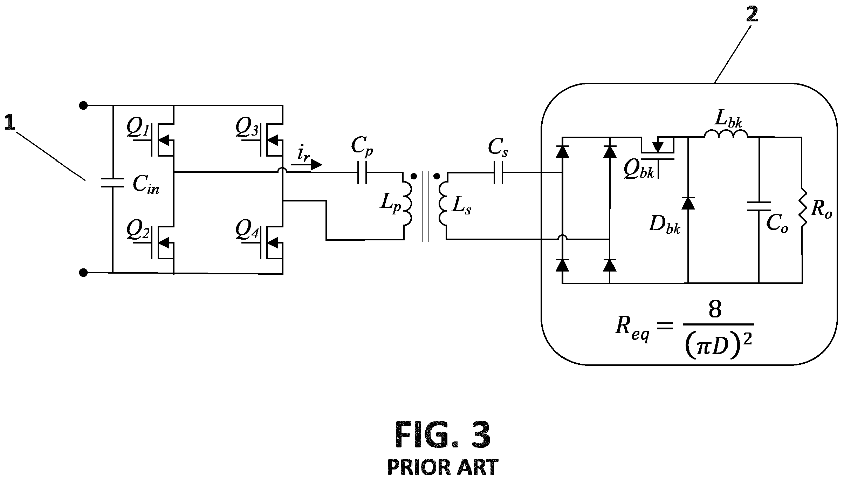

As represented in **Figure 3,** in order to solve this problem and to reach the required battery voltage level during the charging operation, conventionally an additional DC-DC converter, typically: a buck, a boost, or buck boost converters, are incorporated in the receiver, which can modify the equivalent resistance (Req) by controlling the duty cycle (D) to achieve the condition that the equivalent resistance has the same value than the optimum equivalent resistance (Req) = (Req opt).

However, the incorporation of an additional converter does not provide the desired efficiency, and increases the number of components of the system, like inductors, switching transistors and associated controllers, such that complexity and manufacturing costs are also increased.

## Summary of the invention

The invention is defined in the attached independent claim, and satisfactorily solves the above-mentioned drawbacks of the prior art, by providing a wireless power receiver for electric vehicles, that comprises a power-receiving coil ($L_s$) suitable for wirelessly receiving power from a power-transmission coil ($L_p$). The receiver further comprises a rectifier, preferably a synchronous active rectifier, either a full bridge, a semi-bridgeless, or a half-bridge. The rectifier has an input port connected with the power-receiving coil ($L_s$), and an output port adapted to be connected with a battery of an electric vehicle, either directly or indirectly, so that for charging a battery, an alternating signal induced at the power-receiving coil is rectified by the full bridge active rectifier, into a DC voltage suitable to charge a battery of an electric vehicle.

It is to be understood that the power-transmission coil ($L_p$) and the battery are not part of the invention.

In a preferred embodiment, the wireless power receiver further includes several resonant tanks configurations composed by capacitors and inductors connected in series between one terminal of the power-receiving coil ($L_s$), and one terminal of the input port of the active rectifier.

In a preferred embodiment, a capacitor ($C_s$) is connected in series between one terminal of the power-receiving coil ($L_s$), and one terminal of the input port.

The receiver additionally incorporates a controller for operating the synchronous active rectifier, by switching on and off the active devices of the synchronous active rectifier. Typically, the active devices consist of power semiconductor switching devices, like MOSFETs, IGTBs, or other similar semiconductor devices.

The controller is adapted such that when a capacitor ($C_s$) is not connected at the input port of the receiver, it performs a DC voltage suppression control loop that eliminates or prevent DC voltage so as to replace the function of a capacitor at the receiver's input. This DC control loop, suppresses DC voltage that could appear across the receiver due to large currents through the system and parasitic resistances, and unequal duty cycle, so that power losses caused by that reason, are prevented.

This control loop measures voltages at the input port of the rectifier and determines average voltage for several switching cycles. If the average voltage is different than zero then the controller operates the switching devices to make the average voltage equal to zero.

Further advantages of the DC voltage suppression control loop, are the simplification of the receiver design and reduction of the manufacturing cost. Additionally, generation of undesired resonant frequencies is prevented.

Furthermore, this DC voltage suppression control loop, can be applied to any resonant tank configuration (capacitors and coils) that does not force "output constant current".

The receiver further includes a current measuring device for measuring input current ($i_s$), that is, at least the instant current value and /or current polarity changes flowing through the input port. Output voltage (Vo) and/or Output current (10) is/are also measured, since the requested output power or current must be also known.

The current measuring device is also capable of measuring the average current to know the DC current component, for the DC suppression control loop.

According to the invention, the controller is adapted, in a way that based on the measured input current ($i_s$) provided by the current measuring device, to dynamically (that is, during the entire charging process) operate the synchronous active rectifier to set an equivalent resistance (Req) of the receiver, which substantially has the same value as a predetermined optimum equivalent resistance (Req $_{opt}$) of the receiver at the operation resonant frequency. If the predetermined optimum equivalent resistance cannot be reached, then the equivalent resistance (Req) is set to the best possible value.

This equivalent resistance (Req) is the one seen at the input port of the synchronous active rectifier during the charging process.

The equivalent resistance ($R_{eq}$) is set by the controller by operating the synchronous active rectifier, so as to vary the phase angle ($\phi$) between voltage (Vs) at the input port and the current ($i_s$).

By increasing or decreasing the (Req) to get the required value, the energy input and / or the energy output are regulated to obtain a value required by the system.

Additionally, the controller is preferably adapted such that the equivalent resistance (Req) is alternatively or additionally set by varying the waveform of voltage ($V_S$) at the input port of the synchronous active rectifier, and/or by modifying the offset (phi) between Vs and Is and/or the pulse width of Vs.

In a first embodiment, the synchronous active rectifier is a full bridge active rectifier having an input port and an output port, and first and second branches, wherein each branch includes two semiconductor switching devices ($Q_1$, $Q_2$, $Q_3$, $Q_4$) connected in series between the two terminals of the output port, such that the two terminals of the input port are the middle points between the two semiconductor switching devices of each branch.

The full bridge active rectifier allows single phase shift control, phase shift control, and asymmetrical phase shift control, and provides high efficiency and bi-directional power transfer capability.

In a second embodiment, the synchronous active rectifier is a semi-bridgeless rectifier having an input port and an output port, and first and second branches, wherein each branch includes a diode and a semiconductor switching device connected in series between the two terminals of the output port, such that the two terminals of the input port are the middle points between the two semiconductor switching devices of each branch.

The semi-bridgeless rectifier also allows the three types of control than the full bridge active rectifier, and it is a cost-effective solution.

In a third embodiment, the synchronous active rectifier is a half bridge rectifier having an input port and an output port, and first branch that includes two semiconductor switching devices connected in series between the two terminals of the output port, such that one terminal of the input port is the middle point between the two semiconductor switching devices, and the other terminal is also one terminal of the outer port.

The half bridge rectifier allows single phase shift control and asymmetrical phase shift control, and it is a cost-effective solution with bi-directional power transfer capability.

The receiver additionally comprises an output filter connected in parallel and / or series with the output port. The output filter is for example a capacitor, a T filter or a $\pi$ filter.

Preferably, the value of the power-receiving coil ($L_s$) and the value of the resonant tank are matched, such that sinusoidal current ($i_s$) through the input port of the full bridge active rectifier is constant (constant value and waveform).

The receiver is adapted to be installed at an electric vehicle, and to preferably operate at around 85 kHz frequency.

Some advantages of the invention are listed below:

- improved efficiency during power transfer and power conversion,
- voltage and current regulation at the receiver, independent from the emitter of the charging station, thus the safety of the vehicle is increased, emitter regulation loop is very slow due to the use of WiFi communications for the required information for the control via WiFi.
- it allows single phase shift control with zero voltage switching and easy control,
- due to the low losses of the power-receiving coil and rectifier, the receiver can be housed within a single module with natural air cooling,
- varying or adjusting the equivalent resistance by independently controlling the power delivered to electric vehicle battery thus higher efficiency,
- electric vehicle battery or receiver may have a relay wherein the relay controls power intake so to avoid excessive high current,
- the relay controls power intake/delivery to electric vehicle battery via detection,

- it can be constructed with a reduced number of components like semiconductors and drivers; no inductors are needed.

## Brief description of the drawings

Preferred embodiments of the invention are henceforth described with reference to the accompanying drawings, wherein:

Figure 1.- shows an electric diagram of a conventional wireless power transfer system for electric vehicle charges.

Figure 2.- shows two electric diagrams representing the equivalent resistance (Req) of the receiver, according to the prior art.

Figure 3.- shows an electric diagram of wireless power transfer system of the prior art including a buck converter.

Figure 4.- shows an electric diagram of wireless power transfer system according to a first preferred embodiment of the invention, wherein the rectifier is a full bridge active rectifier.

Figure 5.- shows two graphs representing two preferred control techniques of the full bridge rectifier according to the invention. Figure A shows a single-phase shift control, Figure B shows a full phase shift control, and Figure C shows an asymmetrical phase shift.

Figure 6.- shows exemplary implementations of the synchronous active rectifier, wherein in Figure A is a full bridge active rectifier including a resonant tank at the input port, in Figure B is a semi-bridge, and in Figure C is a half bridge implementation.

Figure 7.- shows another preferred embodiment of the invention without receiver capacitor.

Figure 8.- shows waveforms illustrating the controls carried out in the embodiment of Figure 7, in particular in Figure A the single / asymmetrical phase shift control, and in Figure B the phase shift control.

## Preferred embodiment of the invention

Other preferred embodiments of the present invention are described in the appended dependent claims and the multiple combinations of those claims.

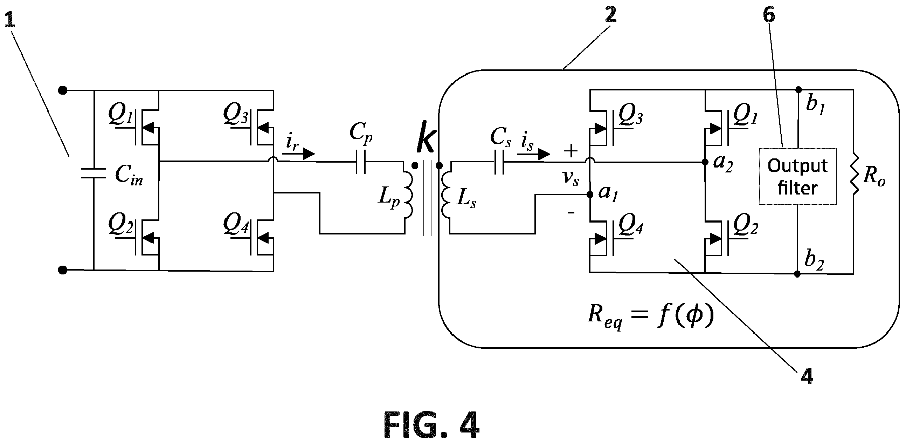

**Figure 4** shows an electric diagram of wireless power transfer system comprising a power transmitter (1) as the one described before with reference to **Figure 1,** and a power receiver (2) according to the invention. The power receiver (2) comprises a power-receiving coil

(L$_s$) suitable for wirelessly receiving power from a power-transmitting coil (L$_p$) when both coils are properly coupled, such that power transmission depends on a coupling factor (k), which in turn would depend on coils alignment, distance and angle between them, thus, optimum equivalent resistance (Req $_{opt}$) depends on (k), additionally considering that since it is a wireless charger system, the coupling factor (k) is low.

If the optimum equivalent resistance cannot be reached, for example due to the battery charging profile demanded by the vehicle, the controller will try to reach the best suitable equivalent possible resistance.

The receiver further comprises a synchronous active rectifier (4), in this example embodied as a full bridge active rectifier that has an input port defined by terminals or nodes (a1,a2), which is connected with the two terminals of the power-receiving coil (L$_s$). A capacitor (C$_s$) is connected in series between one terminal of the power-receiving coil (L$_s$) and one terminal of the input port (a1 ,a2).

The synchronous active rectifier (4) has an output port defined by terminals or nodes (b1 ,b2), that are adapted to be connected with a battery (not shown) of an electric vehicle, represented in **Figure 4** by (Ro) which is the resistance of the output load.

The synchronous active rectifier (4) of the example of **Figure 4,** is formed by two branches connected in parallel between the two terminals of the output port (b1,b2). A first branch has two semiconductor switching devices, in this case two MOSFET transistors (Q$_1$,Q$_2$) connected in series between the two terminals of the output port, and a second branch having two MOSFET transistors (Q$_3$,Q$_4$) connected in series between the two terminals of the output port (b1,b2). As shown in the figure, the terminals (a1,a2) of the input port are the middle points respectively between the pairs of transistors (Q$_1$,Q$_2$) and (Q$_3$,Q$_4$).

The receiver (2) includes a controller (not shown), adapted to be installed at a vehicle and which can be independent or not of the outside vehicle controller. The controller is adapted for operating the synchronous active rectifier, that is, for switching on and off the transistors (Q$_1$,Q$_2$,Q$_3$,Q$_4$) in a known manner.

Additionally, an output filter (6) is connected in parallel or in series with the output port (b1,b2).

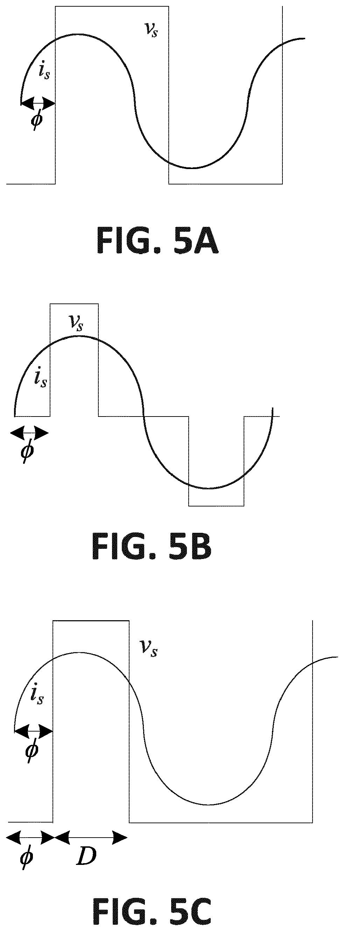

The nominal value of the power-receiving coil (L$_s$) and the value of the capacitor (C$_s$) are matched such that sinusoidal current (i$_s$) (shown in **Figures 5A,5B)** through the input port (a1,a2) of the synchronous active rectifier (4), is constant (constant value and waveform) at the resonant operating frequency of the receiver.

Since the sinusoidal current (i$_s$) waveform is constant at around 85 kHz, according to the invention, by controlling the phase angle ($\phi$) between (v$_s$) and (i$_s$), and/or the duty cycle and/or the phase between the two semi bridges (Q3-Q4 and Q1-Q2), and/or the pulse width of (Vs), the equivalent resistance (R$_{eq}$) seen at the input port (a1,a2) is selected to match the optimum equivalent

resistance (Req $_{opt}$) for this specific resonant operating frequency of the receiver, or to meet the vehicle required current or power. For example, in case excessive current is collected by (Ls) from (Lp), the controller located at the secondary side, independently of the controller placed at the primary side, it is capable to limit the current that flows into the vehicle.

This phase angle ($\phi$) between (v$_s$) and (i$_s$) can be obtained in two different ways to obtain desired equivalent resistance (Req): with a single-phase shift control **(Figure 5A),** or with a full phase shift control **(Figure 5B).**

In the control process of **Figure 5A,** the controller is adapted to dynamically operate the synchronous active rectifier (4) during the charging process, such that the equivalent resistance (Req) is set by modifying the phase angle ($\phi$) between voltage (V$_S$) at the input port and the current (i$_s$).

In the control process of **Figure 5B,** the controller is further adapted such that the equivalent resistance (Req) is additionally set by varying the waveform voltage (Vs) at the input port of the synchronous active rectifier (4).

In the control process of **Figure 5C,** the controller is further adapted such that the equivalent resistance (Req) is additionally set by modifying the phase angle ($\phi$) between voltage (V$_S$) at the input port and the current (i$_s$), and the duty cycle (D) of the voltage (V$_S$).

If current (i$_s$) lags voltage (v$_s$), power will flow from the battery to the grid. This capability allows bidirectional charge.

The controller measures value and polarity of the current (i$_s$), that flows through the power-receiving coil (L$_s$) that flows through the input port, and based on that current measurement, the battery charging current and the battery voltage, the desired value of the equivalent resistance (Req) is calculated by the controller during the charging process, or alternatively it is pre-calculated using a look up table.

The voltage (v$_s$) waveform at the input port (a1 ,a2) of the synchronous active rectifier (4) is modified by the controller to obtain desired equivalent resistance (R$_{eq}$). Desired voltage (v$_s$) waveform is obtained by the controller acting, that is, switching on and off the MOSFETs (Q$_1$,Q$_2$,Q$_3$,Q$_4$).

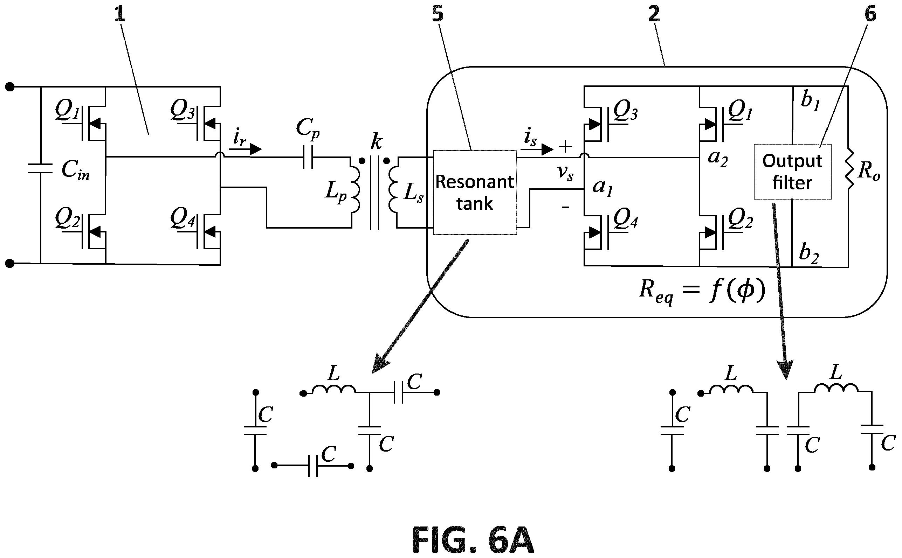

In **Figure 6A** the receiver includes a resonant tank (5) connected between the power-receiving coil (L$_s$) and the input port (a1,a2) of the synchronous active rectifier (4), and output filter (6) at the output (b1,b2). As shown in **Figure 6A,** the resonant tank (5) might be formed by capacitors (C) and inductors (L) connected different configurations.

Similarly, the output filter (6) acts as an AC filter that might consist of a capacitor, a T filter or a $\pi$ filter as represented in **Figure 6A.**

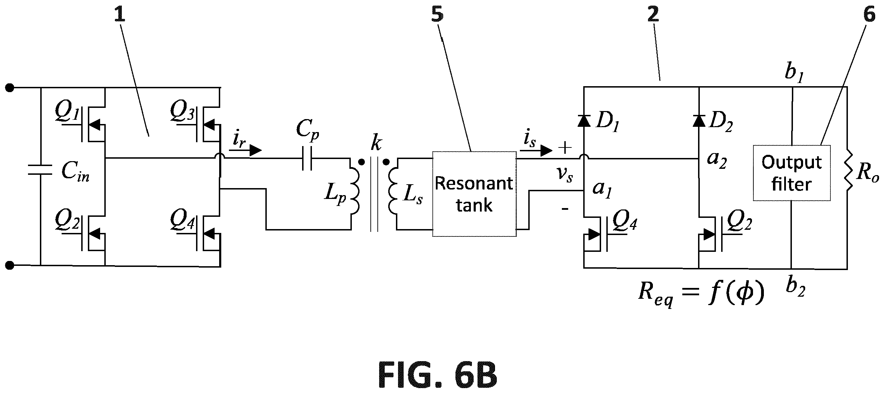

In the alternative embodiment of **Figure 6B,** the synchronous active rectifier (4) is embodied as a semi-bridgeless rectifier having basically the same architecture and components of the diagram of **Figure 6A,** but wherein the two MOSFETs (Q3,Q1) are replaced by diodes (D1,D2) respectively as shown in the figure.

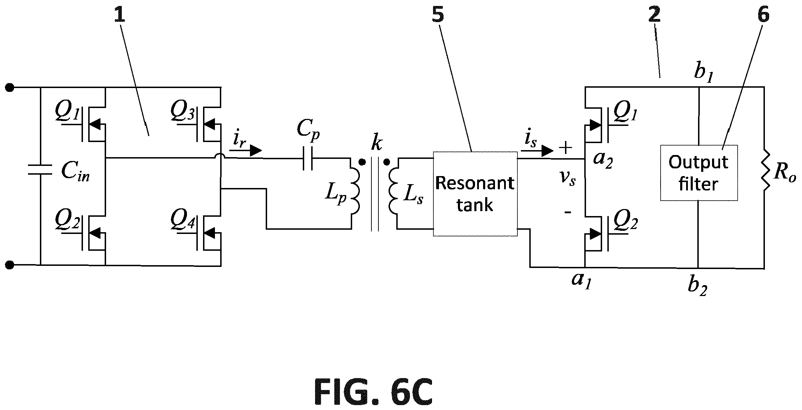

In the alternative embodiment of **Figure 6C,** the synchronous rectifier (4) embodied as a half bridge rectifier also having an input port (a1,a2) and an output port (b1,b2), and first branch that includes two MOSFETs (Q1,Q2) connected in series between the two terminals of the output port (b1,b2). One terminal of the input port (a1) is the middle point between the two MOSFETs, and the other terminal is one terminal (b2) of the outer port. A resonant tank (5) is connected between the power-receiving coil ($L_s$) and the input port (a1,a2), and an output filter (6) is connected at the output port (b1,b2).

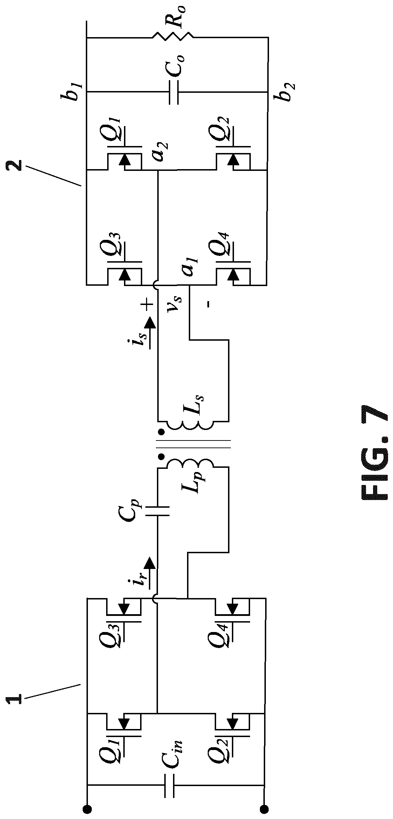

**Figure 7** shows another preferred embodiment of the invention which does not includes a receiver capacitor ($C_s$). When the receiver capacitor ($C_s$) is not used, the invention includes a DC control loop in which the average voltage of ($i_s$), along several switching cycles is measured. If the average voltage is different than zero, the controller operates the switching devices to make it zero.

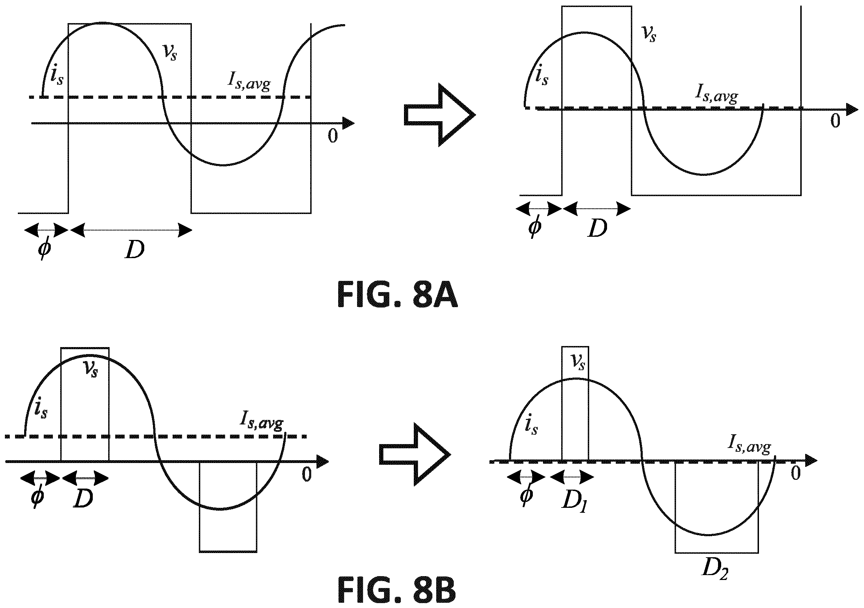

**Figure 8A** shows the single / asymmetrical phase shift control carried out in the embodiment of **Figure 7,** wherein the power regulation loop is regulated by ($\phi$) while the DC current removal control loop is by the duty cycle (D).

**Figure 8B** shows the phase shift control carried out in the embodiment of **Figure 7,** wherein power regulation is governed by ($\phi$) and the mid value of (D), that is, the voltage ($v_s$) is zero. The DC current removal control loop is managed by ($D_1$) and ($D_2$).

In both cases, after detecting an average current ($I_{s,avg}$) different than zero, the voltage waveform is modified by varying the duty cycles (D). This modification allows to control ($I_{s,avg}$) and make it zero.

In any of the above-described embodiments, the MOSFETs can be replaced by IGBTs or any other similar semiconductor devices.

## Claims

1. Wireless power receiver (2) for electric vehicles, comprising:

    a power-receiving coil ($L_s$) suitable for wirelessly receiving power from a power-transmission coil ($L_p$),
    a synchronous active rectifier (4) having an input port (a1,a2) connected with the power-receiving coil ($L_s$), and an output port (b1,b2) adapted to be connected with a battery of an electric vehicle,
    a controller for operating the synchronous active rectifier (4),
    a current measuring device for measuring input current ($i_s$) flowing through the input port (a1,a2),
    wherein the controller is adapted in a way that based on the measured input current ($i_s$) provided by the current measuring device, to dynamically operate the synchronous active rectifier (4) to set an equivalent resistance (Req) seen at the input port (a1,a2) of the synchronous active rectifier (4) during the charging process, which has a value as close as possible to a predetermined optimum equivalent resistance (Req $_{opt}$) at the resonant operating frequency of the receiver (2).

2. Receiver according to claim 1, wherein the value of the equivalent resistance (Req) is set to a value which is substantially the same value as a predetermined optimum equivalent resistance (Req $_{opt}$) at the resonant operating frequency of the receiver (2).

3. Receiver according to claim 1 or 2, wherein the controller is adapted to dynamically operate the synchronous active rectifier (4) during the charging process, such that the equivalent resistance ($R_{eq}$) is set by modifying the phase angle ($\phi$) between voltage (Vs) at the input port and the current ($i_s$).

4. Receiver according to claim 3, wherein the controller is further adapted such that the equivalent resistance (Req) is additionally set by varying the waveform voltage (Vs) at the input port of the synchronous active rectifier (4).

5. Receiver according to any of the preceding claims, wherein the synchronous active rectifier (4) is a full bridge active rectifier having a first and second branches including each branch, two semiconductor switching devices ($Q_1,Q_2,Q_3,Q_4$) connected in series between the two terminals of the output port (b1,b2), and wherein the terminals of the input port (a1,a2) are the middle points between the two semiconductor switching devices of each branch.

6. Receiver according to any of the claims 1 to 4, wherein the synchronous active rectifier (4) is a semi-bridgeless rectifier having an input port (a1,a2) and an output port (b1,b2), and first and second branches, wherein each branch includes a diode (D1,D2) and a semiconductor switching device (Q4,Q2) respectively connected in series between the two terminals of the output port (b1,b2).

7. Receiver according to any of the claims 1 to 4, wherein the synchronous active rectifier (4) is a half-bridge rectifier having an input port (a1,a2) and an output port (b1,b2), and first branch that includes two semiconductor switching devices (Q1,Q2) connected in series between the two terminals of the output port (b1,b2).

8. Receiver according to any of the preceding claims, wherein the controller is adapted to perform a DC voltage suppression control loop that measures voltage at the input port of the synchronous active rectifier (4) and determines average voltage for several switching cycles, and if the average voltage is different than zero, then the controller operates the switching devices to make the average voltage zero.

9. Receiver according to claim 8, further comprising an output AC filter (6) connected in parallel with the output port (b1,b2).

10. Receiver according to claim 9, wherein the any of the preceding claims, wherein the output filter (6) is a capacitor, a T filter or a $\pi$ filter.

11. Receiver according to any of the claims 1 to 7, further comprising a resonant tank (5) in series between one terminal of the power-receiving coil ($L_s$), and one terminal of the input port (a1,a2).

12. Receiver according to claim 11, wherein the value of the power-receiving coil ($L_s$) and the value of the resonant tank (5) are matched such that sinusoidal current ($i_s$) through the input port (a1,a2) of the active synchronous rectifier (4), is constant at the resonant operating frequency of the receiver (2).

13. Receiver according to any of the preceding claims, adapted to be installed in an electric vehicle.

14. Receiver according to any of the preceding claims, adapted to operate at a frequency between 80 - 90 Khz, and preferably around 85 Khz.

15. Receiver according to any of the preceding claims, wherein the controller is adapted such that current ($i_s$) lags voltage ($v_s$), such that power could flow from a battery to a power transmitter.

**FIG. 1**
**PRIOR ART**

**FIG. 2**
**PRIOR ART**

2

1

$Q_1$  $Q_3$  $C_{in}$  $Q_2$  $Q_4$

$i_r$

$C_p$  $L_p$

$C_s$  $L_s$

$L_{bk}$  $R_o$  $C_o$

$Q_{bk}$  $D_{bk}$

$$R_{eq} = \frac{8}{(\pi D)^2}$$

**FIG. 3**
**PRIOR ART**

FIG. 4

**FIG. 5A**

**FIG. 5B**

**FIG. 5C**

**FIG. 6A**

EP 4 002 643 A1

**FIG. 6B**

EP 4 002 643 A1

**FIG. 6C**

EP 4 002 643 A1

FIG. 7

**FIG. 8A**

**FIG. 8B**

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/034593 A1 (PRODRIVE TECH BV [NL]) 21 February 2019 (2019-02-21) | 1-7, 9-11, 13-15 | INV. H02J50/12 |
| A | * paragraphs [0001], [0006], [0007], [0009], [0045], [0053], [0057], [0059], [0073], [0075], [0083]; figures 1,2,4,8-10,12a-12c * ----- | 8,12 | |

TECHNICAL FIELDS
SEARCHED (IPC)

H02J
H04B
B60L
H01F

The present search report has been drawn up for all claims

| Place of search | Date of completion of the search | Examiner |
|---|---|---|
| Munich | 13 April 2021 | Varela Fraile, Pablo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 38 2989

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2021

| Patent document cited in search report | Publication date | Patent family member(s) | Publication date |
|---|---|---|---|
| WO 2019034593 A1 | 21-02-2019 | EP 3669438 A1<br>WO 2019034593 A1 | 24-06-2020<br>21-02-2019 |

EPO FORM P0459

For more details about this annex : see Official Journal of the European Patent Office, No. 12/82